# EUROPEAN PATENT APPLICATION

(11) **EP 2 503 439 A1**
(43) Date of publication of application: **26.09.2012**
(21) Application number: 11190500.6
(22) Date of filing: 24.11.2011
(51) Int. Cl.: G06F 3/048, H04M 1/725, H04N 5/445

(54) **Method for positioning a cursor on a screen**

(30) Priority: 25.03.2011 CN 201110085102
(71) Applicant: VIA Technologies, Inc., Xindian District, New Taipei City 231 (TW)
(72) Inventor: Wu, Guanghui, 201203 Shanghai (CN)
(74) Representative: Käck, Stefan

(57) **Abstract**

The invention provides a method (200) for positioning a cursor on a screen. According to the invention, a system comprises the screen and a keyboard. First, a selected region is initialized to be a whole region of the screen. The selected region is then divided (206) into a plurality of sub-regions, wherein each of the sub-regions respectively corresponds to one of a plurality of predetermined keys of the keyboard. Whether the predetermined keys have been pressed is then detected (210). When one of the predetermined keys has been pressed, the selected region is then set (212) to be the sub-region corresponding to the pressed predetermined key. The position of the cursor is then moved (213) to a center point of the selected region. The dividing step, the detecting step, the setting step, and the moving step are then repeated until the area of the selected region is less than an area threshold.

## Description

### BACKGROUND OF THE INVENTION

### Field of the Invention

The invention relates to screen display, and more particularly to a position of a cursor on the screen.

### Description of the Related Art

Operating systems for current computers, such as Windows operating system, use a cursor to indicate a position for inputting data on a screen. An ordinary user uses a mouse to move the cursor to a target position on the screen and uses a keyboard to input words. Therefore, when the user wants to input words, he must press keys on a keyboard. The user must therefore repeatedly move his hand between the keyboard and the mouse to complete an input task, resulting in inconvenience for the user. If the user can move the position of the cursor with the keyboard, the user does not need to move his hand between the keyboard and the mouse, and the time for inputting words to the computer is therefore shortened. Thus, a method for positioning a cursor on a screen with a keyboard is therefore required.

The size of a television screen is getting bigger and bigger, and selections for users are more and more inconvenient. In addition to displaying video data, the television screen is often used to display control operations. For example, a user must set a plurality of playing variables of a DVD player before the DVD player is used, and the user must also select a target channel from a plurality of channels before a digital television is used to play the target channel. The setting of variables and the selecting of the target channel requires complicated selection operations with a menu shown on a television screen. An ordinary user uses a remote controller to perform the setting and selection tasks. Because the remote controller only has simple direction keys, the user can only sequentially move the cursor on the television screen with the direction keys of the remote controller, resulting in delay of the setting and selection tasks and leading to inconvenience of the user. Thus, a method for rapidly positioning a cursor on a television screen with keys of a remote controller is also required.

### BRIEF SUMMARY OF THE INVENTION

The invention is defined in claim 1. Particular embodiments are set out in the dependent claims.

According to a first aspect of the invention, a method for positioning a cursor on a screen is provided. According to the first aspect of the invention, a system comprises the screen and a keyboard. First, a selected region is initialized to be a whole region of the screen. The selected region is then divided into a plurality of sub-regions, wherein each of the sub-regions respectively corresponds to one of a plurality of predetermined keys of the keyboard. Whether the predetermined keys have been pressed is then detected. When one of the predetermined keys has been pressed, the selected region is then set to be the sub-region corresponding to the pressed predetermined key. The position of the cursor is then moved to a center point of the selected region. The dividing step, the detecting step, the setting step, and the moving step are then repeated until the area of the selected region is less than an area threshold.

According to a second aspect of the invention, the invention further provides a method for positioning a cursor on a screen. According to the second aspect of the invention, a system comprises the screen and a keyboard. First, whether one of a plurality of predetermined keys of the keyboard has been pressed is detected. When one of a plurality of predetermined keys of the keyboard has been pressed, the cursor is discontinuously moved on the screen according to the pressed predetermined keys. Finally, the detecting step and the moving step are repeated until the cursor is shifted to a target location on the screen.

In some embodiments, the method further comprises: setting a selected region of the screen to be a whole region of the screen, wherein discontinuously moving of the cursor comprises: (a) dividing the selected region into a plurality of sub-regions, wherein each of the sub-regions respectively corresponds to one of the predetermined keys; (b) when one of the predetermined keys have been pressed, setting the selected region to be the sub-region corresponding to the pressed predetermined key; and (c) moving the position of the cursor to a center point of the selected region. In further embodiments, the steps (a), (b), and (c) are repeated until the area of the selected region is less than an area threshold.

In still further embodiments, the selected region is divided into 9 sub-regions in the dividing step, and the 9 sub-regions comprise a bottom-left region, a bottom-middle region, a bottom-right region, a middle-left region, a middle-middle region, a middle-right region, a top-left region, a top-middle region, and a top-right region. Alternatively, the selected region is divided into 4 sub-regions in the dividing step, and the 4 sub-regions comprise a bottom-left region, a bottom-right region, a top-left region, and a top-right region.

In some other embodiments, the selected region may be divided into 4 sub-regions or 9 sub-regions in the dividing step, and a user of the system presses a specific key of the keyboard to switch the number of the sub-regions between 4 and 9.

In further embodiments, the system is a digital television system, the screen is a digital television screen, and the keyboard is installed on a remote controller. Alternatively, the system is a cell phone or a computer.

A detailed description is given in the following embodiments with reference to the accompanying drawings.

### BRIEF DESCRIPTION OF THE DRAWINGS

Many aspects of the disclosure can be better understood with reference to the following drawings. The components in the drawings are not necessarily to scale, emphasis instead being placed upon clearly illustrating the principles of the present disclosure. Moreover, in the drawings, like reference numerals designate corresponding parts throughout the several views:
Fig. 1 is a block diagram of a computer system capable of rapidly positioning a cursor on a screen according to the invention;
Fig. 2 is a flowchart of a method for positioning a cursor on a screen according to the invention;
Figs. 3A-3D are a series of schematic diagrams of a first embodiment of adjusting of a position of a cursor according to the invention;
Figs. 4A-4D are a series of schematic diagrams of a second embodiment of adjusting of a position of a cursor according to the invention;
Figs. 5A-5B are a series of schematic diagrams of a third embodiment of adjusting of a position of a cursor according to the invention;
Fig. 6A is a schematic diagram of a menu displayed on a screen of a digital television;
and
Figs. 6B-6C are a series of schematic diagrams of an embodiment of menu selection of a digital television screen according to the invention.

### DETAILED DESCRIPTION OF THE INVENTION

Having summarized various aspects of the present disclosure, reference will now be made in detail to the description of the disclosure as illustrated in the drawings. While the disclosure will be described in connection with these drawings, there is no intent to limit it to the embodiment or embodiments disclosed herein. On the contrary, the intent is to cover all alternatives, modifications and equivalents included within the scope of the disclosure as defined by the appended claims.

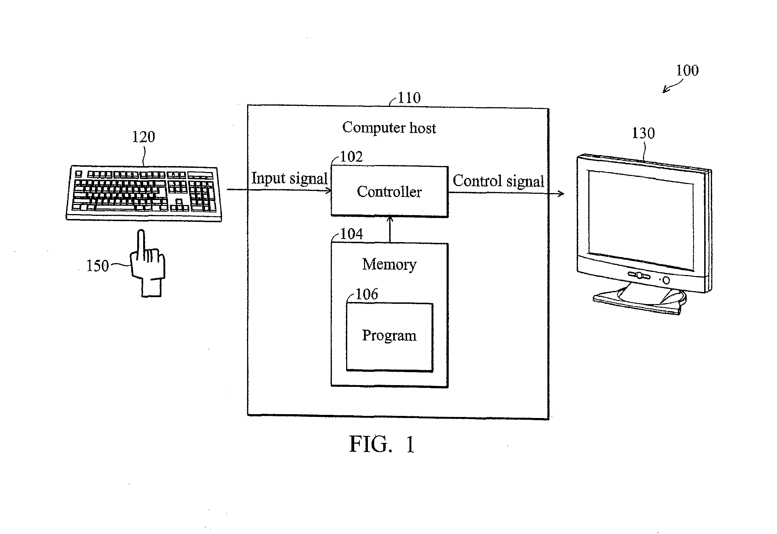

Referring to Fig. 1, a block diagram of a computer system 100 capable of rapidly positioning a cursor on a screen 130 according to the invention is shown. In one embodiment, the computer host 110 comprises a controller 102 and a memory 104, wherein a program 106 for positioning the cursor according to keyboard inputs is stored in the memory 104. A keyboard 120 comprises a plurality of keys, wherein some of the keys are set to be predetermined keys. The controller 102 receives an input signal from the keyboard 120 to identify which of the keys of the keyboard 120 is pressed by a user 150. The controller 102 further sends a control signal to the screen 130. The user 150 presses the keys of the keyboard 120 to input words to the computer host 110. In one embodiment, the screen 130 is a digital television screen, and the keyboard 120 and the computer host 110 are combined to form a remote controller. In other words, the user 150 presses the predetermined keys on the keyboard 120 to move the cursor on the screen 130 for performing menu selection or settings. In another embodiment, the screen 130, the keyboard 120, and the computer host 110 are combined to form a cell phone, and the user 150 presses the predetermined keys on the keyboard 120 to move the cursor on the screen 130 for performing menu selection or settings.

If the user 150 has directed the computer host 110 to execute the program 106, when the user 150 wants to change the position of the cursor on the screen 130, the user 150 does not need to move his hand from the keyboard 120 to a mouse. The user 150 directly presses the predetermined keys on the keyboard 120 to rapidly adjust the position of the cursor on the screen. When the controller 102 determines the pressed predetermined keys according to the input signal received from the keyboard 120, the controller 102 sends the control signal to the screen 130 to control the cursor movement on the screen 130. Because the position of the cursor on the screen 130 is discontinuously changed according to the control signal sent by the controller 102, the time required by moving the cursor to a target position on the screen 130 is shortened, and the performance of the computer system 100 is therefore improved.

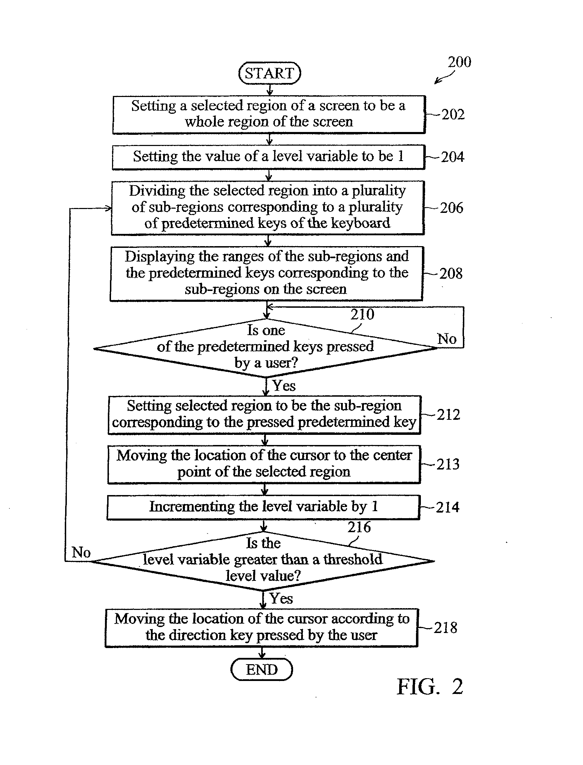

Referring to Fig. 2, a flowchart of a method 200 for positioning a cursor on a screen according to the invention is shown. The program 106 shown in Fig. 1 comprises the instruction set for performing the steps of the method 200, and the controller 102 of the computer host 110 can move the cursor on the screen 130 according to the method 200. Assume that there are a selected region variable and a level variable in the computer host 110. The selected region variable indicates which region of the screen 130 is selected by a user. The level variable indicates which division level of the whole screen the selected region is. After the program 106 is executed, the controller 102 first sets the selected region to be a whole region of the screen 130 (step 202). The controller 102 then sets the value of the level variable to be 1 (step 204). The controller 102 then divides the selected region into a plurality of sub-regions, wherein each of the sub-regions respectively corresponds to one of a plurality of predetermined keys of the keyboard 120 (step 206). The controller 102 then sends a control signal to the screen 130 to display the ranges of the sub-regions, and sends the control signal to the screen 130 to display the predetermined keys on the corresponding sub-regions on the screen 130 to remind the user to press one of the predetermined keys (step 208).

The controller 102 then detects which of the predetermined keys is pressed by the user 150 according to the input signal sent from the keyboard 120 (step 210). When the user 150 presses one of the predetermined keys, the controller 102 sets the selected region to be the sub-region corresponding to the pressed predetermined key (step 212), and sends the control signal to the screen 130 to move the location of the cursor to a center point of the selected region (step 213). The controller 102 then adds one to the level variable (step 214). The controller 102 then determines whether the level variable is greater than a threshold value (step 216). In one embodiment, the threshold value is 3 or 4. When the level variable is less than or equal to the threshold value, the controller 102 executes the steps 206-214 again to further narrow the size of the selected region and to further move the cursor to the center point of the newly selected region.

When the value of the level variable is greater than the threshold value (step 216), the size of the selected region is smaller than an area threshold, the controller 102 therefore finely adjusts the location of the cursor according to the direction keys pressed by the user (step 218). For example, a screen with a resolution of 1280 × 1024 pixels contains 1,310,720 pixels. When a user sequentially presses four predetermined keys to make four selections of the selected region, the level variable is equal to 5, and the size of the final selected region is 200 (=1,310,720/(94)) pixels. In one embodiment, when the level variable is greater than the threshold value (step 216), the controller 102 opens a window on the screen 130 to display a magnified figure of the selected region for the user to finely adjust the location of the cursor. In another embodiment, the controller 102 detects whether a backspace key is pressed by the user. When the backspace key has been pressed, the controller 102 recovers the selected region to a previous undivided state.

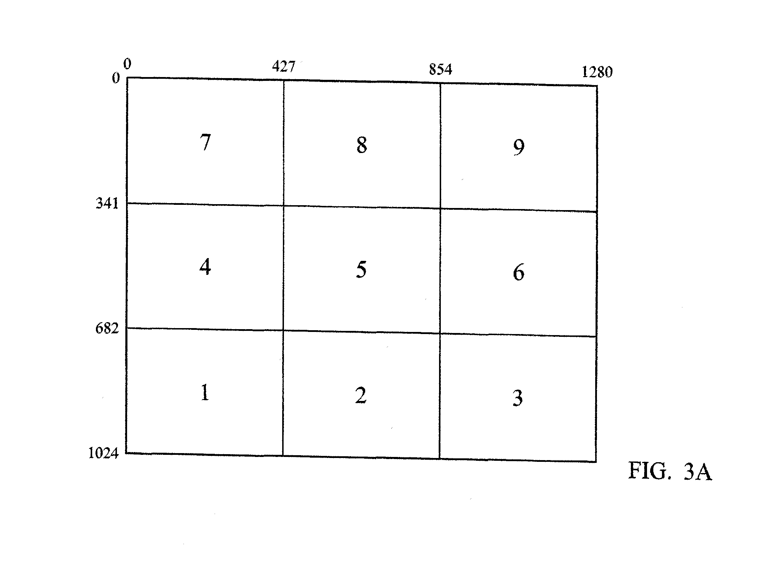

Figs. 3A-3D show a series of schematic diagrams of a first embodiment of adjusting of a position of a cursor according to the invention. Assume that the size of the screen 130 is 1024 × 1280 pixels. First, as shown in Fig. 3A, the selected region is the whole area of the screen 130, and the selected region is divided into 9 sub-regions including a bottom-left region, a bottom-middle region, a bottom-right region, a middle-left region, a middle-middle region, a middle-right region, a top-left region, a top-middle region, and a top-right region. The 9 sub-regions respectively correspond to the digit keys 1, 2, 3, 4, 5, 6, 7, 8, and 9 of the keyboard 120. For example, the bottom-left region, the bottom-middle region, the bottom-right region, the middle-left region, the middle-middle region, the middle-right region, the top-left region, the top-middle region, and the top-right region respectively correspond to the digit keys 1, 2, 3, 4, 5, 6, 7, 8, and 9. The digit keys therefore are shown on the corresponding sub-regions. In another embodiment, the 9 sub-regions respectively correspond to the character keys z, x, c, a, s, d, q, w, and e of the keyboard 120. For example, the bottom-left region, the bottom-middle region, the bottom-right region, the middle-left region, the middle-middle region, the middle-right region, the top-left region, the top-middle region, and the top-right region respectively correspond to the character keys z, x, c, a, s, d, q, w, and e. That is the user can select any N keys in the keyboard to respectively correspond to the N sub-regions on the screen.

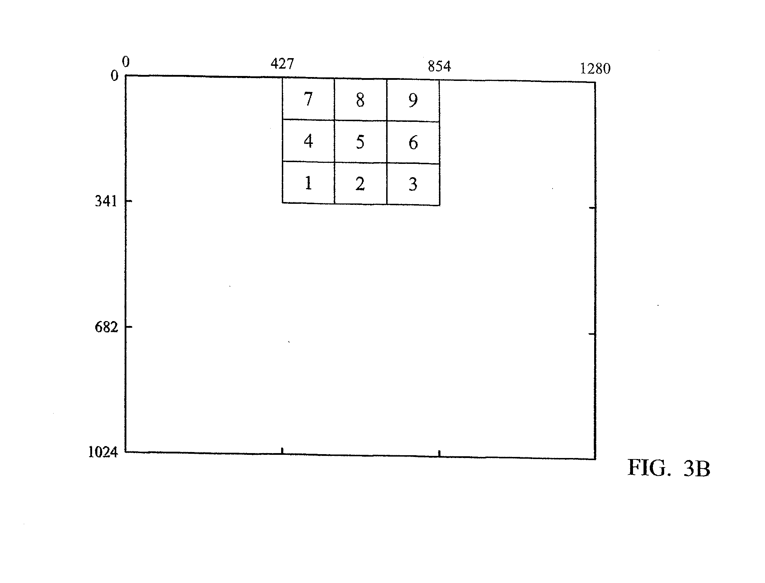

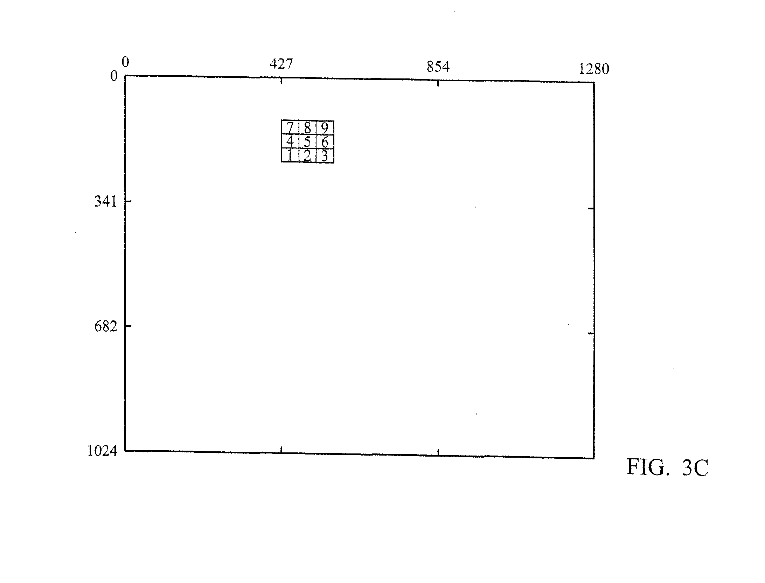

Assume that the user presses a digit key 8. The selected region is therefore set to be the top-middle region corresponding to the digit key 8, and the cursor is moved to the center point of the top-middle region, as shown in Fig. 3B. The top-middle region is further divided into 9 sub-regions, and the digit keys corresponding to the 9 sub-regions are displayed on the screen. Assume that the user presses a digit key 4. The selected region is therefore set to be the middle-left region corresponding to the digit key 4, and the cursor is moved to the center point of the middle-left region, as shown in Fig. 3C. The middle-left region is further divided into 9 sub-regions, and the digit keys corresponding to the 9 sub-regions are displayed on the screen.

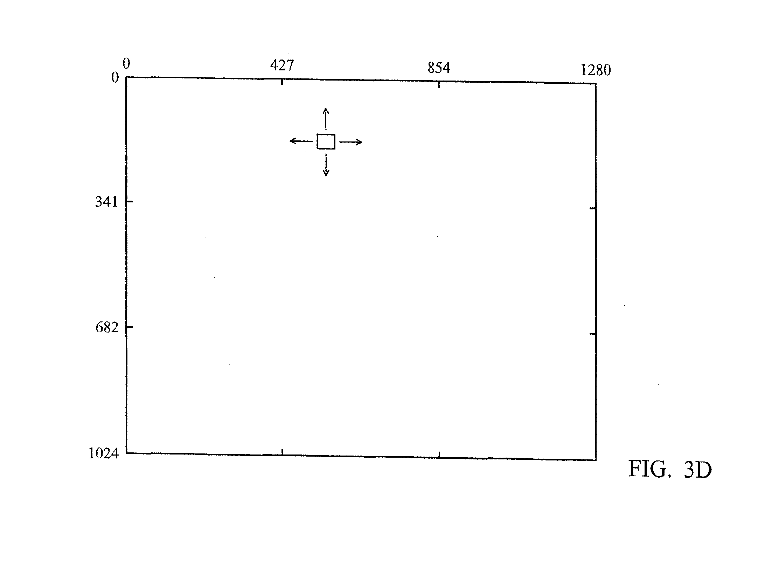

Assume that the user then presses a digit key 6. The selected region is therefore set to be the middle-right region corresponding to the digit key 6, and the cursor is moved to the center point of the middle-right region, as shown in Fig. 3D. The user has sequentially pressed 3 digit keys 8, 4, and 6 to make adjustments of the selected region three times, the level variable is equal to 4, and the size of the selected region is smaller than an area threshold. Assume that the threshold value is 3. The level variable is therefore greater than the threshold value, and the computer host 110 finely adjusts the location of the cursor according to the direction keys is pressed by the user until the cursor is moved to a target location. As shown in Figs. 3A-3D, the cursor is discontinuously moved according to the keys pressed by the user, and the time required for moving the cursor to a target location is shortened. The system performance of the computer system 100 is therefore improved.

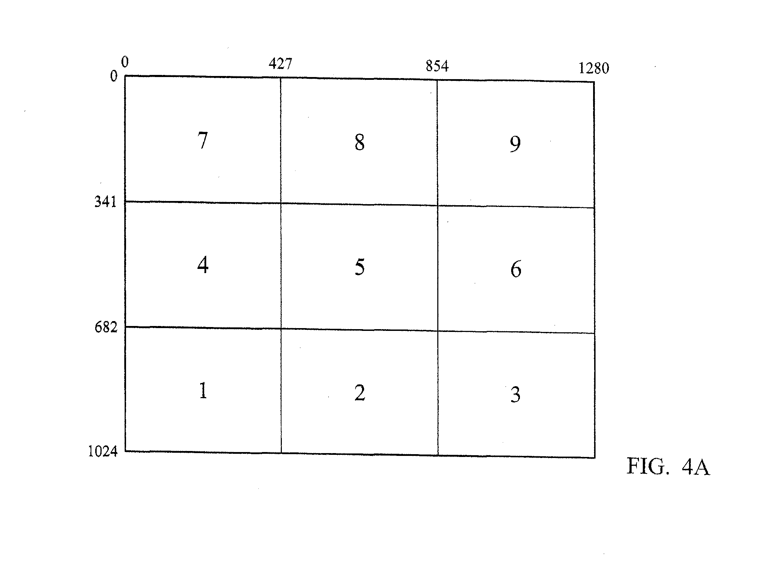

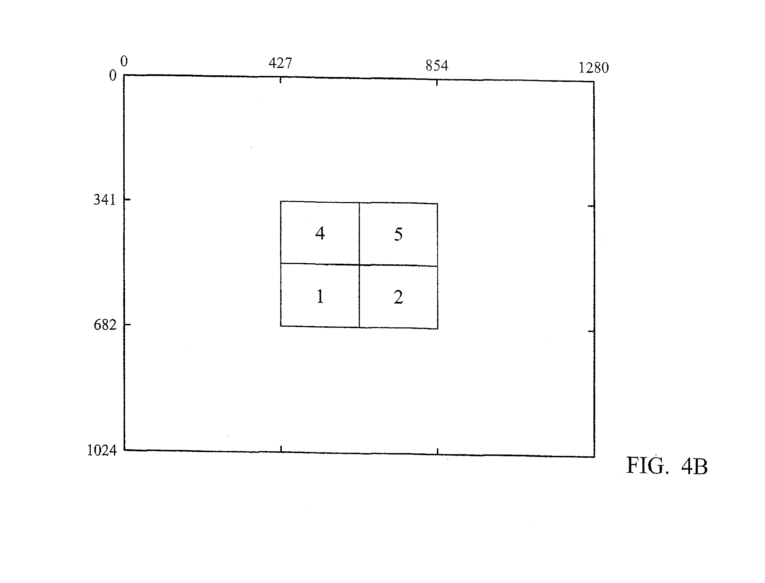

Figs. 4A-4D show a series of schematic diagrams of a second embodiment of adjusting of a position of a cursor according to the invention. First, as shown in Fig. 4A, the selected region is the whole area of the screen 130, and the selected region is divided into 9 sub-regions respectively corresponding to the digit keys 1, 2, 3, 4, 5, 6, 7, 8, and 9 of the keyboard 120. Assume that the user presses a digit key 5. The selected region is therefore set to be the middle-middle region corresponding to the digit key 5, and the cursor is moved to the center point of the middle-middle region, as shown in Fig. 4B. The number of the sub-regions can be adjusted by the user. Assume that the user presses a specific key to switch the number of the sub-regions from 9 to 4. The middle-middle region is then divided into 4 sub-regions, and the digit keys corresponding to the 4 sub-regions are displayed on the screen, as shown in Fig. 4B.

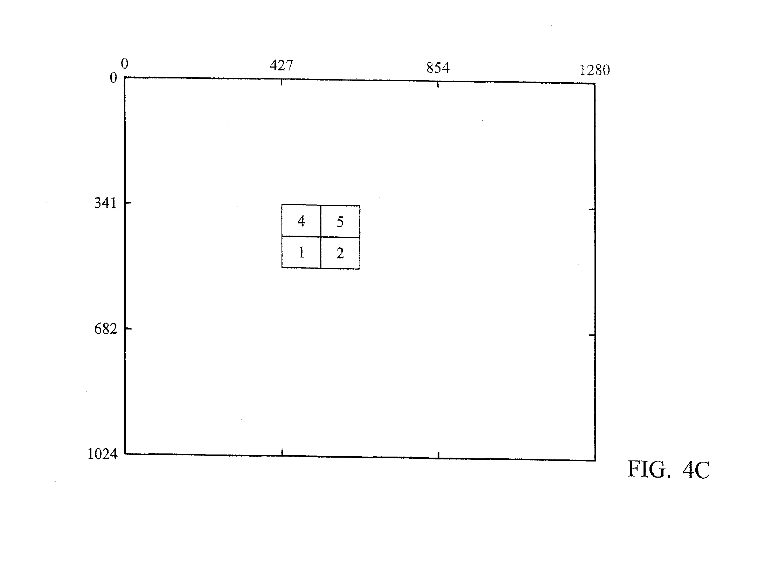

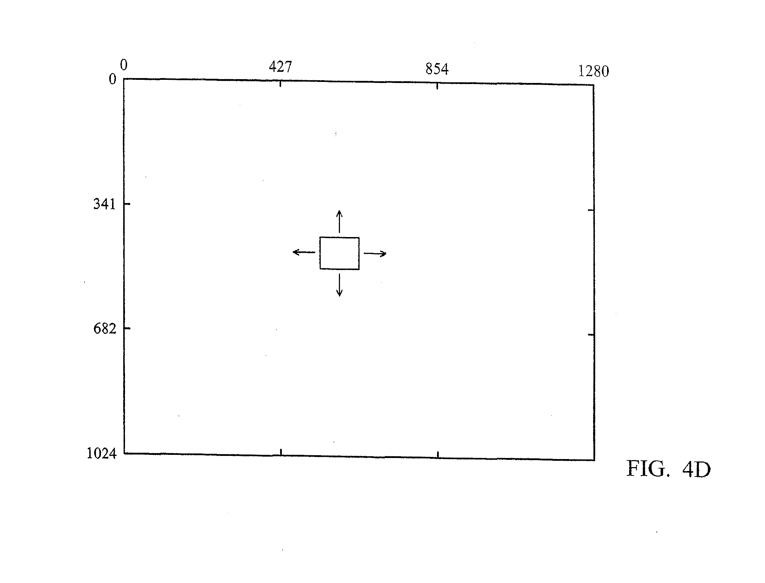

In one embodiment, the 4 sub-regions comprise a bottom-left region, a bottom-right region, a top-left region, and a top-right region. The 4 sub-regions respectively correspond to the digit keys 1, 2, 4, and 5 of the keyboard 120. Assume that the user presses a digit key 4. The selected region is therefore set to be the top-left region corresponding to the digit key 4, and the cursor is moved to the center point of the top-left region, as shown in Fig. 4C. The top-left region is further divided into 4 sub-regions, and the digit keys corresponding to the 4 sub-regions are displayed on the screen. Assume that the user then presses a digit key 2. The selected region is therefore set to be the bottom-right region corresponding to the digit key 2, and the cursor is moved to the center point of the bottom-right region, as shown in Fig. 4D. The user has sequentially pressed 3 digit keys 5, 4, and 2 to make adjustment of the selected region three times, the level variable is equal to 4, and the size of the selected region is smaller than an area threshold. Assume that the threshold value is 3. The level variable is therefore greater than the threshold value, and the computer host 110 finely adjusts the location of the cursor according to the direction keys pressed by the user until the cursor is moved to a target location.

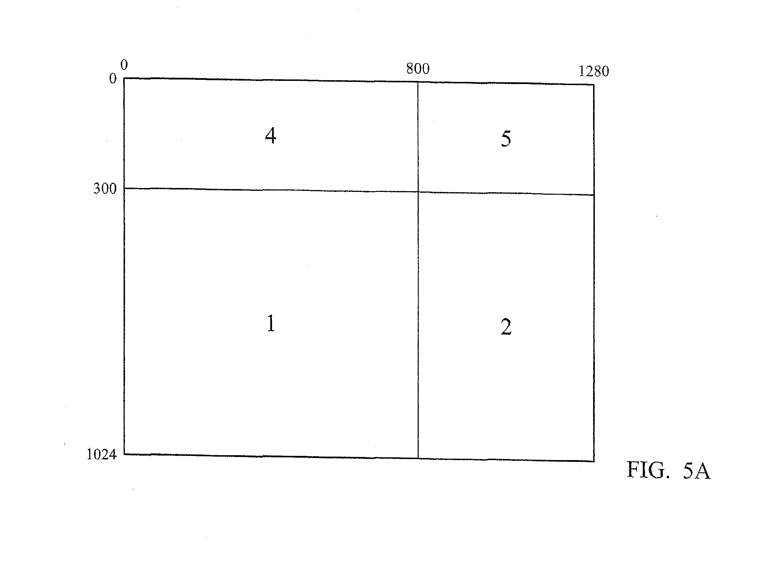

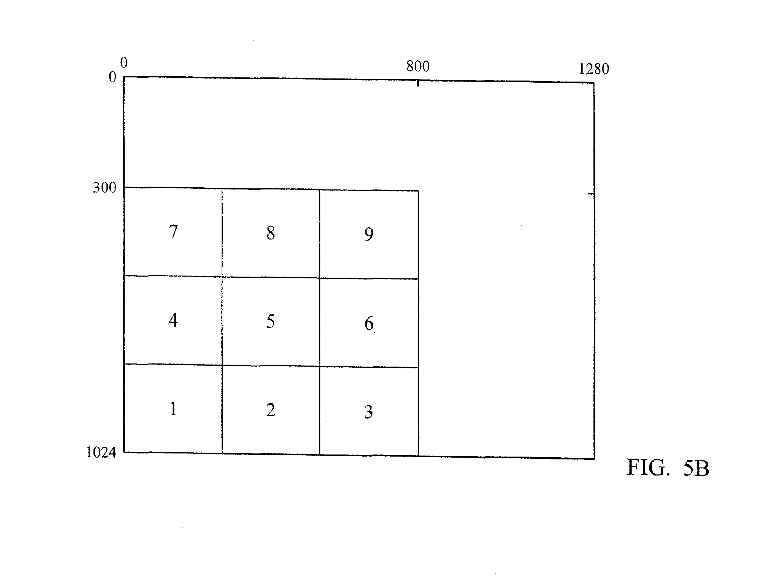

Figs. 5A-5B show a series of schematic diagrams of a third embodiment of adjusting of a position of a cursor according to the invention. First, as shown in Fig. 5A, the selected region is set to be the whole area of the screen 130. Ordinarily, the cursor is initially located at a center point of the whole screen. If the initial location of the cursor is not at the center point of the whole screen, the computer host 110 divides the whole screen into 4 sub-regions with different sizes according to the initial location of the cursor. In one embodiment, the 4 sub-regions comprise a bottom-left region, a bottom-right region, a top-left region, and a top-right region, as shown in Fig. 5A. The 4 sub-regions respectively correspond to the digit keys 1, 2, 4, and 5 of the keyboard 120. Assume that the user presses a digit key 1. The selected region is therefore set to be the bottom-left region corresponding to the digit key 1, and the cursor is moved to the center point of the bottom-left region, as shown in Fig. 5B. Assume that the user presses a specific key to switch the number of the sub-regions from 4 to 9. The bottom-left region is then divided into 9 sub-regions, and the digit keys corresponding to the 9 sub-regions are displayed on the screen, as shown in Fig. 5B. The subsequent positioning process of the cursor is similar with those shown in Figs. 4C-4D and Figs. 5C-5D and is therefore omitted. That is the sub-regions can be divided different size and different number in each dividing step according to the users' requirements.

The aforementioned method for positioning a cursor can further be applied to menu selection on a digital television screen, a cell phone screen or any other devices with keyboard and screen. Because a cell phone is not equipped with a mouse, the method can rapidly move the cursor to perform menu selection on the screen of the cell phone according to keys pressed by a user.

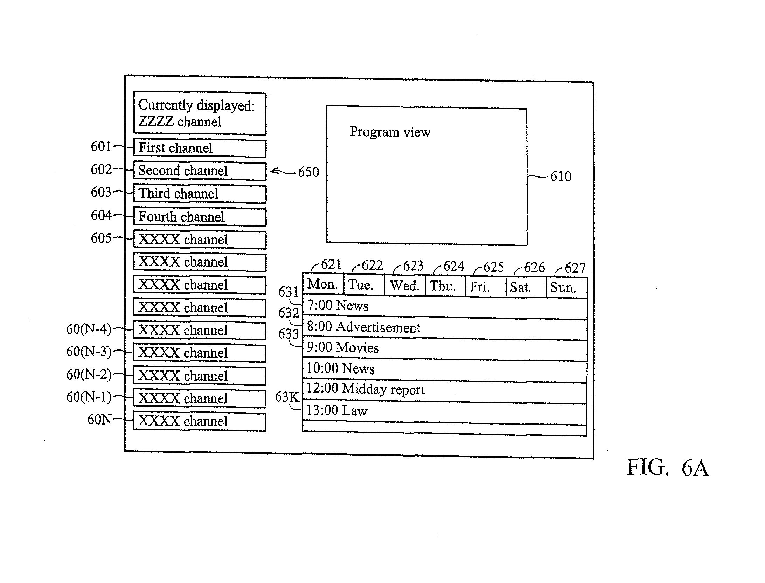

Referring to Fig. 6A, a schematic diagram of a menu displayed on a screen of a digital television is shown. There is a channel menu of a plurality of channels 601-60N on the left of the screen. There is also a program view window 610 on the top-right of the screen. There is also a time menu of each hour programs 631-63K ready to be played, and there is a weekday menu of Monday to Sunday 621-627 on the bottom-right of the screen.

First, the user must select a channel from the channel menu. Assume that a second channel 602 is currently selected, as shown in Fig. 6A. If the user wants to change the selected channel from the second channel 602 to the XXXX channel 60N on the bottom of the channel menu, the user must continuously press the down direction key of a remote controller for a plurality of times, and a delay period results. After the target channel is selected, the user must select the playing date and the playing time. The user therefore must continuously press the right direction key of the remote controller for a plurality of times to select the playing date on the weekday menu, and then continuously press the down direction key of the remote controller for a plurality of times to select the playing time on the time menu. After the played channel, the playing date, and the playing time are selected, the user can then select the program view window 610 to play the target program. Because the user must press the direction keys of the remote controller for a plurality of times to set the played channel, the playing date, and the playing time, the conventional selection method leads to inconvenience for users.

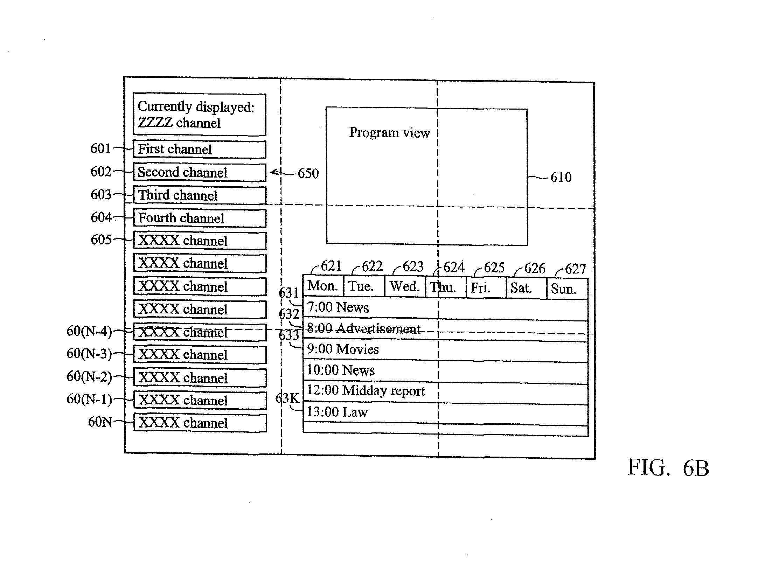

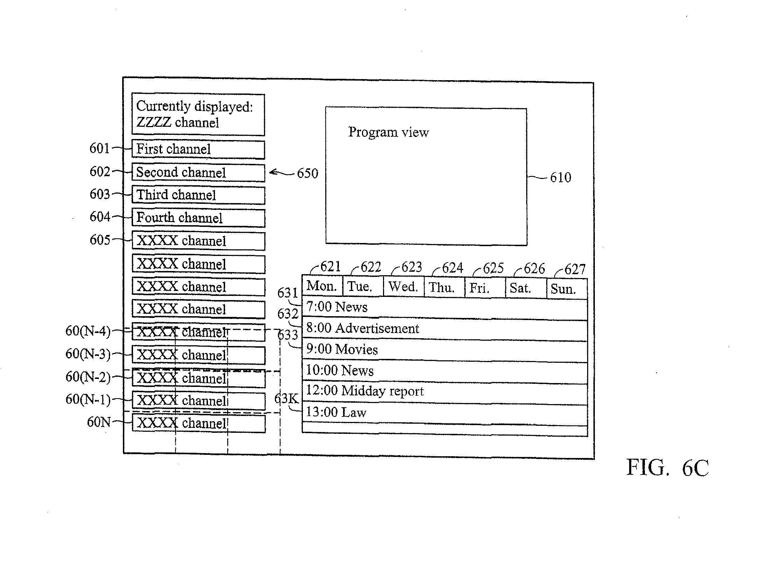

Figs. 6B-6C show a series of schematic diagrams of an embodiment of menu selection of a digital television screen according to the invention. Assume that the user wants to select a channel 60N on the bottom-left of the screen. A selected region of the screen is first set to be the whole screen, and the selected region is divided into 9 sub-regions respectively corresponding to digit keys 1, 2, 3, 4, 5, 6, 7, 8, and 9 of a remote controller, as shown in Fig. 6B. Assume that the user presses a digit key 1. The remote controller then sets the selected region to be the bottom-left sub-region corresponding to the digit key 1 of the remote controller, an input target position is moved to a center point of the bottom-left sub-region, and the selected region is further divided into 9 sub-regions, as shown in Fig. 6C. Assume that the user then presses a digit key 1 of the remote controller again. The remote controller then sets the selected region to be the bottom-left sub-region corresponding to the digit key 1 of the remote controller, and the input target position is further moved to a center point of the bottom-left sub-region. Because the position of the menu of the target channel 60N is overlapped with the bottom-left sub-region shown in Fig. 6C, the selected channel is set to be the channel 60N by the remote controller. Thus, the user only presses the digit key 1 of the remote controller twice to complete the selection of the channel menu, and the delay is shortened. The system performance is therefore improved.

It should be emphasized that the above-described embodiments are merely examples of possible implementations. Many variations and modifications may be made to the above-described embodiments without departing from the principles of the present disclosure. All such modifications and variations are intended to be included herein within the scope of this disclosure and protected by the following claims.

## Claims

1. A method for positioning a cursor on a screen (130), wherein a system (100) comprises the screen (130) and a keyboard (120), the method comprising:
(a) setting (202) a selected region to be a whole region of the screen (130);
(b) dividing (206) the selected region into a plurality of sub-regions, wherein each of the sub-regions respectively corresponds to one of a plurality of predetermined keys of the keyboard (120);
(c) detecting (210) whether the predetermined keys have been pressed;
(d) when one of the predetermined keys has been pressed, setting (212) the selected region to be the sub-region corresponding to the pressed predetermined key;
(e) moving (213) the position of the cursor to a center point of the selected region; and
(f) repeating the steps (b), (c), (d), and (e) until the area of the selected region is less than an area threshold.

2. The method as claimed in claim 1, wherein the method further comprises:
after the step (b) is performed, displaying (208) the ranges of the sub-regions on the screen (130).

3. The method as claimed in claim 1 or 2, wherein the method further comprises:
after the step (b) is performed, respectively showing (208) the predetermined keys corresponding to the sub-regions on the screen (130) to remind a user (150) to press the predetermined keys.

4. The method as claimed in claim 1, 2 or 3, wherein the method further comprises:
after the step (a) is performed, setting (204) an initial value of a level variable to be 1; and
when the step (d) is performed, incrementing (214) the level variable by one,
wherein determination of whether the area of the selected region is less than the area threshold in the step (f) comprises:
when the level variable is greater than a threshold value, determining (216) that the area of the selected region is less than the area threshold.

5. The method as claimed in any of claims 1-4, wherein the selected region is divided into 9 sub-regions in the step (b), and the 9 sub-regions comprise a bottom-left region, a bottom-middle region, a bottom-right region, a middle-left region, a middle-middle region, a middle-right region, a top-left region, a top-middle region, and a top-right region.

6. The method as claimed in claim 5, wherein the predetermined keys comprises digit keys 1, 2, 3, 4, 5, 6, 7, 8, and 9 of the keyboard (120), and the bottom-left region, the bottom-middle region, the bottom-right region, the middle-left region, the middle-middle region, the middle-right region, the top-left region, the top-middle region, and the top-right region respectively correspond to the digit keys 1, 2, 3, 4, 5, 6, 7, 8, and 9.

7. The method as claimed in claim 5, wherein the predetermined keys comprises character keys z, x, c, a, s, d, q, w, and e of the keyboard (120), and the bottom-left region, the bottom-middle region, the bottom-right region, the middle-left region, the middle-middle region, the middle-right region, the top-left region, the top-middle region, and the top-right region respectively correspond to the character keys z, x, c, a, s, d, q, w, and e.

8. The method as claimed in any of claims 1-4, wherein the selected region is divided into 4 sub-regions in the step (b), and the 4 sub-regions comprise a bottom-left region, a bottom-right region, a top-left region, and a top-right region.

9. The method as claimed in any of the preceding claims, wherein the selected region is dividable into 4 sub-regions or 9 sub-regions in the step (b), and a user (150) of the system (100) presses a specific key of the keyboard (120) to switch the number of the sub-regions between 4 and 9.

10. The method as claimed in any of the preceding claims, wherein the step (b) comprises:
determining whether the position of the cursor is located at the center point of the selected region;
when the position of the cursor is located at the center point of the selected region, dividing the selected region into four or nine sub-regions, and
when the position of the cursor is not located at the center point of the selected region, dividing the selected region into four sub-regions as the position of the cursor for the center point, wherein the four sub-regions comprise a bottom-left region, a bottom-right region, a top-left region, and a top-right region.

11. The method as claimed in any of the preceding claims, wherein the method further comprises:
when the area of the selected region is determined to be less than the area threshold at the step (f), detecting whether one of a plurality of direction keys of the keyboard (120) is pressed; and
adjusting (218) the location of the cursor on the screen (130) according to the pressed direction key.

12. The method as claimed in claim 11, wherein the method further comprises:
after the area of the selected region is determined to be less than the area threshold at the step (f), displaying a window on the screen to show a magnified figure of the selected region for the user to finely adjust the location of the cursor.

13. The method as claimed in any of the preceding claims, wherein the method further comprises:
detecting whether a backspace key of the keyboard (120) has been pressed; and
when the backspace key has been pressed, recovering the selected region to a previously undivided form.

14. The method as claimed in any of the preceding claims, wherein the system (100) is a digital television system, the screen (130) is a digital television screen, and the keyboard (120) is installed on a remote controller.

15. The method as claimed in any of claims 1-13, wherein the system (100) is a cell phone or a computer.
